(19) Europäisches Patentamt
European Patent Office
Office européen des brevets

(11) **EP 4 172 554 B1**

(12) **EUROPÄISCHE PATENTSCHRIFT**

(45) Veröffentlichungstag und Bekanntmachung des Hinweises auf die Patenterteilung:
**10.01.2024   Patentblatt 2024/02**

(21) Anmeldenummer: **22709169.1**

(22) Anmeldetag: **14.01.2022**

(51) Internationale Patentklassifikation (IPC):
**G01B 7/31** *(2006.01)*      **G01L 5/162** *(2020.01)*
**G01M 1/02** *(2006.01)*      **G01M 1/22** *(2006.01)*
**G01M 1/24** *(2006.01)*      **G01M 13/027** *(2019.01)*

(52) Gemeinsame Patentklassifikation (CPC):
**G01B 7/31; G01M 1/02; G01M 1/22; G01M 15/02**

(86) Internationale Anmeldenummer:
**PCT/AT2022/060010**

(87) Internationale Veröffentlichungsnummer:
**WO 2022/150864 (21.07.2022 Gazette 2022/29)**

(54) **VERFAHREN ZUR KORREKTUR EINER FEHLAUSRICHTUNG WENIGSTENS EINES WELLENSTRANGS**

METHOD FOR CORRECTING A MISALIGNMENT OF AT LEAST ONE SHAFTING

PROCÉDÉ DE CORRECTION D'UN DÉFAUT D'ALIGNEMENT D'AU MOINS UNE LIGNE D'ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2021   AT 500112021**

(43) Veröffentlichungstag der Anmeldung:
**03.05.2023   Patentblatt 2023/18**

(73) Patentinhaber:
• **AVL List GmbH**
  **8020 Graz (AT)**
• **Piezocryst Advanced Sensorics GmbH**
  **8020 Graz (AT)**

(72) Erfinder:
• **SCHRICKER, Alexander**
  **8046 Graz (AT)**
• **MODER, Jakob**
  **8800 Unzmarkt (AT)**
• **NEUBAUER, Andreas**
  **8302 Nestelbach (AT)**
• **REISINGER, Erwin**
  **8073 Feldkirchen bei Graz (AT)**
• **MESSNER, Michael**
  **4400 St.Ulrich bei Steyr (AT)**

(56) Entgegenhaltungen:
**WO-A1-2019/144171      CN-A- 110 763 134 US-A1- 2014 028 298**

• **WANG YINGZHAO ET AL: "Double Fed Induction Generator Shaft Misalignment Monitoring by FBG Frame Strain Sensing", IEEE SENSORS JOURNAL, IEEE, USA, Bd. 20, Nr. 15, 29. März 2020 (2020-03-29) , Seiten 8541-8551, XP011797301, ISSN: 1530-437X, DOI: 10.1109/JSEN.2020.2984309 [gefunden am 2020-07-02]**

**Beschreibung**

Die Erfindung betrifft ein Verfahren zur Korrektur einer Fehlausrichtung wenigstens eines Wellenstrangs eines Antriebsstrangs auf einem Prüfstand, wobei wenigstens ein piezoelektrischer Kraftsensor in einem Kraftpfad angeordnet ist, über welchen bei einer Leistungsübertragung zwischen einer Belastungsmaschine des Prüfstands und einer Antriebsmaschine des Antriebsstrangs oder des Prüfstands mittels des Wellenstrangs ein Kraftfluss übertragbar ist. Des Weiteren betrifft die Erfindung einen Prüfstand, auf welchem das Verfahren ausgeführt werden kann.

In WANG YINGZHAO ET AL: "Double Fed Induction Generator Shaft Misalignment Monitoring by FBG Frame Strain Sensing", IEEE SENSORS JOURNAL, IEEE, USA, Bd. 20, Nr. 15, 29. März 2020 (2020-03-29), Seiten 8541-8551, wird der Aufbau eines Antriebsstrangs eines Windrads beschrieben. An der Endplatte des Generators sind piezoelektrische Beschleunigungssensoren angebracht, die im Betrieb des Windrads Vibrationen messen und daraus auf eine Fehlausrichtung schließen.

Fehlausrichtungen entstehen durch Montage- und Fertigungsunsicherheiten, Setzungserscheinungen und thermische Dehnung, welche zu Verlagerungen eines rotierenden Körpers führen. Solche Verlagerungen wirken sich schädlich auf die Funktion und Lebensdauer der Rotationskörper aus. Fehlausrichtungen führen zu Verspannungskräften, insbesondere Biegemomenten und Druckkräften, auf den Rotationskörper und seine Lagerung.

Die Patentanmeldung WO/2021/011982 offenbart verschiedene Prüfstände und Messanordnungen, um Fehlausrichtungen auf den Prüfständen unter dem Einsatz von piezoelektrischen Kraftsensoren zu detektieren.

Es ist die Aufgabe der Erfindung, ein Verfahren zur Detektion und/oder Korrektur einer Unwucht und/oder einer Fehlausrichtung eines Wellenstrangs eines Antriebsstrangprüfstandsbetriebs sowie einen entsprechenden Antriebsstrangprüfstand bereitzustellen.

Diese Aufgabe wird durch die unabhängigen Ansprüche gelöst. Vorteilhafte Ausgestaltungen werden in den Unteransprüchen beansprucht.

Ein erster Aspekt der Erfindung betrifft ein Verfahren gemäß Anspruch 1 zur Korrektur einer Fehlausrichtung wenigstens eines Wellenstrangs eines Antriebsstrangs auf einem Prüfstand, wobei wenigstens ein piezoelektrischer Kraftsensor in einem Kraftpfad angeordnet ist, über welchen bei einer Leistungsübertragung zwischen einer Belastungsmaschine des Prüfstands und einer Antriebsmaschine des Antriebsstrangs oder des Prüfstands mittels des Wellenstrangs ein Kraftfluss übertragbar ist, folgende Arbeitsschritte aufweisend:

Durchführen einer Kraftmessung in wenigstens einer Ebene und/oder normal zu der wenigstens einen Ebene, welche von einer Drehachse des Wellenstrangs geschnitten wird und vorzugsweise wenigstens im Wesentlichen normal zu der Drehachse liegt;
Analysieren eines Messwerts oder eines Messwertverlaufs der Kraftmessung zur Detektion einer Fehlausrichtung des Wellenstrangs;
Ermitteln von Zielwerten für eine Positionskorrektur der Belastungsmaschine oder der Antriebsmaschine, um die Fehlausrichtung zu minimieren; wobei die Zielwerte eine Richtung und einen Betrag angeben, um die ein auszurichtendes Bauteil verschoben und/oder gedreht werden soll, oder einen Absolutwert einer Richtung und einer Position angeben, zu welchen das auszurichtende Bauteil verschoben und/oder gedreht werden soll;
wobei zum Ermitteln der Zielwerte die beiden folgenden weiteren Arbeitsschritte ausgeführt werden:

Ermitteln von Biegemomenten oder eines Biegemomentverlaufs an dem Wellenstrang auf der Grundlage des Messwerts oder der Messwertverläufe der Kraftmessung;
Ermitteln einer Biegelinie des Wellenstrangs auf der Grundlage der ermittelten Biegemomente oder des Biegemomentverlaufs, wobei die Zielwerte mittels der Biegelinie ermittelt werden; und
Ausgeben der Zielwerte.

Ein zweiter Aspekt der Erfindung betrifft ein Antriebsstrangprüfstand gemäß Anspruch 14 aufweisend:

eine Belastungsmaschine, welche mit einem zu testenden Wellenstrang verbindbar ist;
wenigstens ein piezoelektrischer Kraftsensor, welcher in einem Kraftpfad angeordnet ist, über welchen bei einer Leistungsübertragung von der Belastungsmaschine des Prüfstands über den Wellenstrang ein Kraftfluss übertragen wird, und eingerichtet ist, um eine Kraftmessung in einer Ebene und/oder normal zu der Ebene, welche von einer Drehachse des Wellenstrangs geschnitten wird und vorzugsweise wenigstens im Wesentlichen normal zu der Drehachse liegt, durchzuführen; und
eine Signalverarbeitungseinrichtung mit Mitteln, eingerichtet zum Durchführen der Kraftmessung;
Mitteln, eingerichtet zum Analysieren eines Messwerts oder eines Messwertverlaufs der Kraftmessung zur Detektion einer Fehlausrichtung des Wellenstrangs;
Mitteln zum Ermitteln von Zielwerten für eine Positionskorrektur der Belastungsmaschine oder der Antriebsmaschine, um die Fehlausrichtung zu minimieren;

wobei die Zielwerte eine Richtung und einen Betrag angeben, um die ein auszurichtendes Bauteil verschoben und/oder gedreht werden soll, oder einen Absolutwert einer Richtung und einer Position angeben, zu welchen das auszurichtende Bauteil verschoben und/oder gedreht werden soll;

wobei zum Ermitteln der Zielwerte die Signalverarbeitungseinrichtung weiter ausgelegt ist zum: Ermitteln von Biegemomenten oder eines Biegemomentverlaufs an dem Wellenstrang auf der Grundlage des Messwerts oder der Messwertverläufe der Kraftmessung;

Ermitteln einer Biegelinie des Wellenstrangs auf der Grundlage der ermittelten Biegemomente oder des Biegemomentverlaufs, wobei die Zielwerte mittels der Biegelinie ermittelt werden; und

Mitteln zum Ausgeben der Zielwerte.

Weitere Aspekte der Erfindung betreffen ein Computerprogramm und ein Computer-lesbares Medium. Entsprechend kann das Verfahren gemäß dem ersten Aspekt der Erfindung computerimplementiert sein.

Ein Zielwert im Sinne der Erfindung gibt vorzugsweise eine Richtung und einen Betrag an, um die ein auszurichtendes Bauteil verschoben und/oder gedreht werden soll. Des Weiteren kann ein Zielwert auch einen Absolutwert einer Richtung und einer Position angeben, zu welchen das auszurichtende Bauteil verschoben und/oder gedreht werden soll.

Ein Wellenstrang im Sinne der Erfindung weist eine oder mehrere, drehverbundene Wellen auf.

"Übertragbar" im Sinne der Erfindung heißt vorzugsweise, "kann übertragen werden" oder "wird übertragen".

Ein Kraftfluss im Sinne der Erfindung ist vorzugsweise ein Weg einer Kraft und/oder eines Drehmoment in einem mechanischen System von einem Angriffspunkt, insbesondere einer Stelle der Einleitung, bis zu einer Stelle oder mehreren Stellen, an der oder denen die Kraft und/oder das Drehmoment durch eine Reaktionskraft und/oder ein Reaktionsmoment aufgenommen werden. Vorzugsweise setzt sich der Kraftfluss aus einer Kraft, insbesondere einer Querkraft zur Drehrichtung der Welle, und einem Drehmoment, insbesondere um die Drehachse, zusammen.

Ein Leistungsfluss im Sinne der Erfindung ist vorzugsweise ein Weg einer Übertragung von Leistung in einem mechanischen System von einer Stelle der Einleitung bis zu einer Stelle oder mehreren Stellen, an welchen die Leistung abgenommen wird.

Ein piezoelektrisches Messelement im Sinne der Erfindung weist vorzugsweise einen Piezokristall sowie eine Ladungsableitung bzw. eine elektrische Verschaltung auf.

Eine Maschine im Sinne der Erfindung ist eingerichtet zum Umwandeln von Energie, vorzugsweise einer kinetischen Energie, insbesondere einer Rotation, in elektrische Energie oder umgekehrt oder von chemischer Energie in eine kinetische Energie. Eine Maschine im Sinne der Erfindung weist vorzugsweise ein Gehäuse auf.

Eine Abstützvorrichtung im Sinne der Erfindung ist vorzugsweise eine Vorrichtung zum Abstützen eines Elements gegenüber einer auf dieses Element wirkenden Kraft und/oder eines auf dieses Element wirkenden Drehmoments. Eine Abstützvorrichtung ist vorzugsweise dazu eingerichtet, eine sogenannte Reaktionskraft bzw. Lagerreaktionskraft bereitzustellen. Eine Abstützvorrichtung im Sinne der Erfindung dient vorzugsweise zum Abstützen der Lagervorrichtung. Vorzugsweise ist die Abstützvorrichtung eine Getriebeglocke, ein Gehäuse des Antriebsstrangs oder auch eine Bodenplatte.

Detektieren im Sinne der Erfindung ist vorzugsweise ein Feststellen und/oder ein Quantifizieren und/oder ein Lokalisieren und/oder ein Analysieren.

Ein Mittel im Sinne der Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessor-Einheit (CPU), und/oder ein oder mehrere Programme oder Programm-Module aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus zu geben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, dass die CPU die Schritte solcher Verfahren ausführen kann und damit insbesondere eine Unwucht und/oder eine Fehlausrichtung detektieren kann.

Ein Inkrementalgeber im Sinne der Erfindung kann vorzugsweise einzelne Winkelsegmente und/oder ganze Umdrehungen feststellen. Insbesondere gibt der Inkrementalgeber wenigstens einen Puls pro Umdrehung.

Die Erfindung beruht insbesondere auf dem Ansatz, eine Fehlausrichtung eines Wellenstrangs eines Antriebsstrangs auf einem Prüfstand mittels Kraftsensoren, insbesondere Kraftsensoren, welche zur Bestimmung von Drehmomenten im Testbetrieb auf dem Prüfstand vorgesehen sind, auszurichten. Weitere, Messverfahren oder Messinstrumentation, insbesondere die im Stand der Technik üblicherweise zum Einsatz kommenden optischen Verfahren, werden durch den Einsatz der Erfindung nicht benötig.

Insbesondere muss ein Wellenstrang nicht gesondert extern, d.h. nicht auf dem Prüfstand, ausgerichtet werden.

Die Detektion der Fehlausrichtung erfolgt vielmehr durch ein Herstellen eines Kraftschlusses zwischen der Belastungsmaschine, eines sogenannten Dyno, und der Antriebsmaschine unmittelbar auf dem Prüfstand. Durch die Erfindung kann ein Wellenstrang daher im zusammengebauten Zustand, mit allen Montageunsicherheiten, wie ungleichen Schraubengewichten, Ausrichtfehlern, Passungsspielen und Fertigungsfehlern, wie Exzentrizität, Asymmetrie, Dichtefehler, etc., ausgerichtet werden.

Für die zur Korrektur nötigen Kraftmessungen werden erfindungsgemäß vorzugsweise piezoelektrische Messelemente eingesetzt, welche eine besonders zuverlässige Messung erlauben und aufgrund ihrer Steifheit nur geringfügige Elastizitäten zu dem schwingungsfähigen System des Antriebsstrangs hinzufügen. Die piezoelektrischen Messelemente sind vorzugsweise fest im Prüfstand verbaut, wodurch das Messsignal physikalisch unverfälscht erfasst werden kann. Insbesondere können die Messelemente von einer Zwischenplatte oder Bodenplatte gestützt werden.

Da unmittelbar die physikalische Größe "Kraft" erfasst wird, kann ein Rückschluss auf die Schädigungswirkung auf mechanische Komponenten gezogen werden. Ein empirischer Ansatz zur Beurteilung des Zustands von Maschinen ist nicht notwendig. Auf der Grundlage der erfindungsgemäßen Bestimmung von Ausrichtungsfehlern könnten daher neue Normen zur Maschinensicherheit erarbeitet werden. Fehlausrichtungen verursachen, zusätzlich zu den Gravitationskräften, weitere raumfeste, das heißt nicht mit der Drehzahl umlaufende, Kräfte oder Drehmomente. Durch die Erfindung können Fehlausrichtungen ohne zusätzliche Schwingungsanalysen festgestellt werden.

Verändert sich die Ausrichtung des Wellenstrangs im Betrieb, kann dies unter Einsatz der Erfindung bereits am Prüfstand detektiert werden, und es können Gegenmaßnahmen, beispielsweise ein Nothalt bzw. eine Lastreduktion, eingeleitet werden, um eine dauerhafte Schädigung des Antriebsstrangs oder gar des Prüfstands zu vermeiden.

Darüber hinaus werden erfindungsgemäße Zielwerte zur Korrektur der Fehlausrichtung ermittelt. Auf der Grundlage dieser Zielwerte kann eine, insbesondere automatisierte, Positionskorrektur der Belastungsmaschine und/oder der Antriebsmaschine vorgenommen werden. Hierdurch kann die Fehlausrichtung direkt auf dem Prüfstand verringert oder gar entfernt werden. Die Ermittlung der Zielwerte vereinfacht das Einrichten oder Kalibrieren einer Messanordnung, welche bisher im Allgemeinen manuell unter Einsatz optischer Methoden erfolgt, stark. Insbesondere kann hierdurch die hierfür benötigte Zeit um Größenordnungen reduziert werden. Durch die Möglichkeit der Automatisierung kann zudem auf den Einsatz von hochqualifiziertem Personal für diese Aufgaben verzichtet werden.

In einer weiteren vorteilhaften Ausgestaltung weist das Verfahren des Weiteren die folgenden Arbeitsschritte auf:

Prüfen, ob ein Biegemoment oder Biegemomentverlauf an dem Wellenstrang einen Schwellenwert überschreitet; und

Iteratives Wiederholen des Verfahrens, wenn der der Schwellenwert überschritten wird, oder Beenden des Verfahrens, wenn der Schwellenwert nicht überschritten wird.

Ein iterativer Prozess zur Optimierung der Ausrichtung des Wellenstrangs auf der Grundlage der bestimmten Biegemomente oder Biegemomentverläufe ermöglich eine besonders präzise Ermittlung von Zielwerten.

In einer weiteren vorteilhaften Ausgestaltung weist das Verfahren des Weiteren die folgenden Arbeitsschritte auf:

Lösen eines Kraftschlusses zwischen der Belastungsmaschine und der Antriebsmaschine, insbesondere durch Öffnen einer Kupplung des Wellenstrangs.

Durch Lösen des Kraftschlusses kann die Position der Belastungsmaschine und/oder der Antriebsmaschine besonders einfach verändert werden.

In einer weiteren vorteilhaften Ausgestaltung weist das Verfahren des Weiteren die folgenden Arbeitsschritte auf:

Verändern einer Position der Belastungsmaschine und/oder der Antriebsmaschine auf dem Prüfstand auf der Grundlage der ausgegebenen Zielwerte.

Vorzugsweise wird dieses Verändern der Position automatisiert ausgeführt. Weiter vorzugsweise weist der Prüfstand hierfür eine Verstelleinrichtung auf, eingerichtet, um eine Position der Belastungsmaschine oder der Antriebsmaschine translatorisch und/oder rotatorisch zu verändern.

In einer weiteren vorteilhaften Ausgestaltung weist das Verfahren des Weiteren die folgenden Arbeitsschritte auf:

Herstellen eines Kraftschlusses zwischen der Belastungsmaschine und der Antriebsmaschine.

Vorzugsweise wird der Kraftschluss wieder nach dem Verändern der Position der Belastungsmaschine und/oder der Antriebsmaschine hergestellt.

In einer weiteren vorteilhaften Ausgestaltung des Verfahrens wird eine für den Prüfstand spezifische Konstante, insbesondere das Produkt aus E-Modul und Widerstandsmoment, des Wellenstrangs zur Berechnung der Biegelinien durch zwei Kraftmessungen mit jeweils verschiedenen Positionen der Antriebsmaschine oder der Belastungsmaschine ermittelt.

Hierdurch kann eine Messanordnung kalibriert werden, ohne dass Materialeigenschaften des Wellenstrangs, insbesondere dessen Steifigkeit, bekannt sind.

In einer weiteren vorteilhaften Ausgestaltung des Verfahrens ist die Drehachse des Wellenstrangs eine Drehachse jener Welle des Wellenstrangs ist, an welcher die Kraftmessung durchgeführt wird.

Vorzugsweise ist die Ebene, in welcher die Kraftmessungen durchgeführt werden, durch die Lagerpunkte des Wellenstrangs an der Maschine, an welcher die Kraftsensoren montiert sind, definiert. Weiter vorzugsweise ist die Ebene durch die Punkte definiert, an welchen die Kraftsensoren angeordnet sind.

In einer weiteren vorteilhaften Ausgestaltung des Verfahrens erfolgt die Kraftmessung in einem stationären Zustand oder einem quasi-stationären Zustand des Wellenstrangs.

Ein stationärer Zustand des Wellenstrangs im Sinne der Erfindung liegt vorzugsweise dann vor, wenn der Wellenstrang nicht rotiert.

Ein quasi-stationärer Zustand des Wellenstrangs im Sinne der Erfindung liegt vorzugsweise dann vor, wenn der Wellenstrang mit einer Winkelgeschwindigkeit rotiert, bei welcher eine Reaktionszeit des Kraftsensors in Bezug auf eine Veränderungsgeschwindigkeit einer Drehposition des Wellenstrangs vergleichsweise klein ist. Insbesondere können Kräfte so gemessen werden, dass sie nicht von Dynamik beeinflusst sind. Vorzugsweise ist ein Betrag der Winkelgeschwindigkeit so gering, dass dessen träge Masse einen geringen oder gar keinen Einfluss hat, insbesondere dass der Wellenstrang zum Anhalten einen Drehwinkelbereich von weniger als etwa 90°, bevorzugt etwa 70°, noch bevorzugter etwa 15°, noch bevorzugter etwa 10°, und am bevorzugtesten etwa 5° benötigt. Vorzugsweise weist der Wellenstrang im quasistationären Zustand keine Schwingungen auf.

Hierdurch kann auch eine Detektion einer Fehlausrichtung in einem stationären oder quasi-stationären Zustand des Wellenstrangs vorgenommen werden. Dies ermöglicht es, die Fehlausrichtung noch vor einem eigentlichen Prüfbetrieb auf dem Prüfstand zu ermitteln. Schäden an der zu prüfenden Antriebsmaschine oder dem Prüfstand können auf diese Weise vermieden werden.

In einer weiteren vorteilhaften Ausgestaltung des Verfahrens wird die Kraftmessung überwacht, indem der Messwert oder die Messwerte mit einem Schwellenwert verglichen wird oder werden, welcher eine kritische Belastung des Wellenstrangs kennzeichnet, wobei, wenn der Schwellenwert überschritten wird, eine Rotation des Wellenstrangs angehalten wird oder keine Rotation vorgenommen wird.

Auch hierdurch können Schäden an der zu prüfenden Antriebsmaschine oder dem Prüfstand vermieden werden.

In einer weiteren vorteilhaften Ausgestaltung des Verfahrens sind mehrere piezoelektrische Sensoren in dem Kraftpfad vorhanden und jede der Kraftmessungen der piezoelektrischen Sensoren wird überwacht.

In einer weiteren vorteilhaften Ausgestaltung des Verfahrens wird beim Analysieren zwischen Parallelversatz und/oder Winkelversatz des Wellenstrangs in Bezug auf die Fehlausrichtung unterschieden.

Die in Bezug auf die im ersten Aspekt der Erfindung im Weiteren beschriebenen Merkmale und Vorteile gelten für die weiteren Aspekte der Erfindung entsprechend und umgekehrt.

In einer vorteilhaften Ausgestaltung weist der Antriebsstrangprüfstand zusätzlich eine Verstelleinrichtung auf, eingerichtet, um eine Position der Belastungsmaschine translatorisch und/oder rotatorisch zu verändern,

wobei der Antriebsstrangprüfstand, insbesondere die Signalverarbeitungseinrichtung, des Weiteren aufweist:

Mittel, eingerichtet zum Steuern der Verstelleinrichtung auf der Grundlage der ausgegebenen Zielwerte.

Weitere Vorteile und Merkmale gehen aus der nachfolgenden Beschreibung der bevorzugten Ausführungsbeispiele in Bezug auf die Figuren hervor. Die Figuren zeigen wenigstens teilweise schematisch:

**Fig. 1a**  eine Draufsicht auf eine Stirnseite einer Belastungsmaschine, auf welcher eine Welle der Belastungsmaschine austritt;

**Fig. 1b**  eine Seitenansicht der Belastungsmaschine nach Fig. 1a;

**Fig. 1c**  zwei Draufsichten auf eine Messanordnung mit einem ersten Ausführungsbeispiel eines Antriebsstrangprüfstands und einer Belastungsmaschine nach Fig. 1a und 1b, mittels welchen ein Verfahren zur Korrektur einer Fehlausrichtung ausführbar ist;

**Fig. 2**  ein Ausführungsbeispiel eines Verfahrens zur Korrektur einer Fehlausrichtung;

**Fig. 3**  vier Diagramme, welche Kräfte, Biegemomente, eine Biegelinie für einen Winkelversatz und eine Biegelinie für einen Parallelversatz eines Wellenstrangs auf einem Prüfstand darstellen;

**Fig. 4**  ein Diagramm mit Biegelinien für Parallelversatz und Biegelinien für Winkelversatz in axialer Richtung eines Wellenstrangs;

**Fig. 5** eine Draufsicht auf eine Messanordnung mit einem zweiten Ausführungsbeispiel eines Antriebsstrangprüfstands;

**Fig. 6** eine Draufsicht auf eine Messanordnung mit einem dritten Ausführungsbeispiel eines Antriebsstrangprüfstands;

**Fig. 7** eine Draufsicht auf ein viertes Ausführungsbeispiel eines Antriebsstrangprüfstands; und

**Fig. 8** ein Detail der Antriebsstrangprüfstände nach den Fig. 1, 5, 6 und 7.

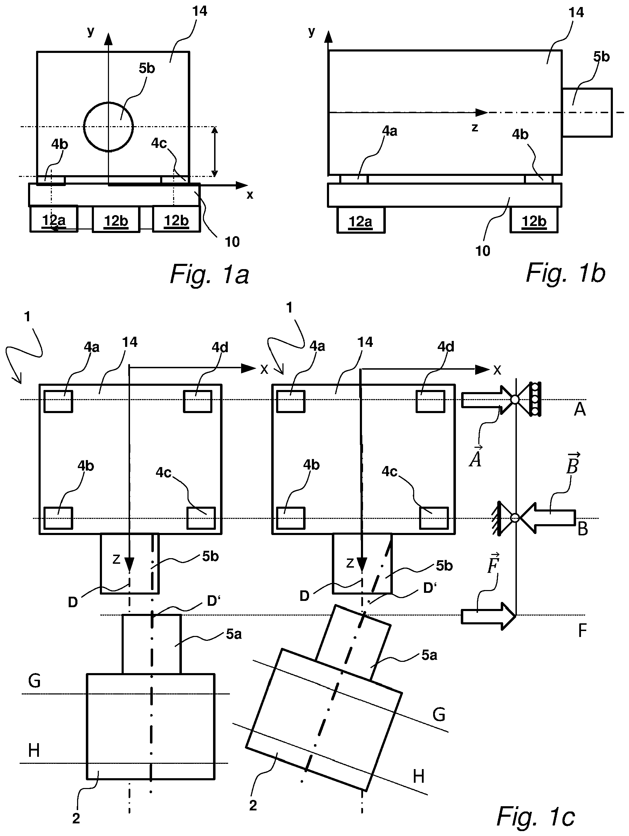

Die Figuren 1a, 1b und 1c zeigen drei verschiedene Ansichten eines ersten Ausführungsbeispiel eines Antriebsstrangprüfstands 1. Die Ansichten der Figuren 1a und 1b zeigen jeweils ausschließlich eine Belastungsmaschine 14 des Antriebsstrangprüfstands 1, Fig. 1c zeigt zwei Ansichten einer Messanordnung mit ein der Belastungsmaschine 14 nach Figuren 1 a und 1b und einer zu testenden Antriebsmaschine 2.

Die Ausrichtung der einzelnen Ansichten von Fig. 1a, 1b und 1c zueinander ergibt sich aus den jeweils eingezeichneten Koordinatenachsen x, y, c eines Bezugssystems.

**Fig. 1a** zeigt eine Draufsicht in Gegenrichtung der z-Achse auf eine Stirnseite einer Belastungsmaschine 14, auf welcher eine Welle 5b der Belastungsmaschine 14 austritt. **Fig. 1b** zeigt eine Seitenansicht entlang der x-Achse der Belastungsmaschine nach Fig. 1a. Die Belastungsmaschine 14 ist über Messelemente 4a, 4b, 4c, 4d eines Kraftsensors auf einer Bodenplatte oder Zwischenplatte 10 abgestützt. Vorzugsweise lagert die Bodenplatte oder Zwischenplatte 10 auch die Messelemente 4a, 4b, 4c, 4d in horizontaler Richtung. Vorzugsweise ist an der Bodenplatte oder Zwischenplatte 10 eine Verstelleinrichtung 12a, 12, 12c vorgesehen. Diese weist vorzugsweise einen ersten Aktor 12a, einen zweiten Aktor 12b und einen dritten Aktor 12c auf, um eine Ausrichtung der Bodenplatte oder Zwischenplatte 10 und damit auch eine Ausrichtung der Belastungsmaschine 14 in Richtung der x-Achse und/oder der y-Achse zu verschieben und um die x-Achse und/oder die y-Achse zu verschwenken.

In **Fig. 1c** sind die Antriebsmaschine 2 und die Belastungsmaschine 14 jeweils mit einem Wellenstrang drehmomentübertragend verbunden oder verbindbar. Dieser Wellenstrang ist zum Zwecke der Übersichtlichkeit in dieser Figur nicht vollständig dargestellt.

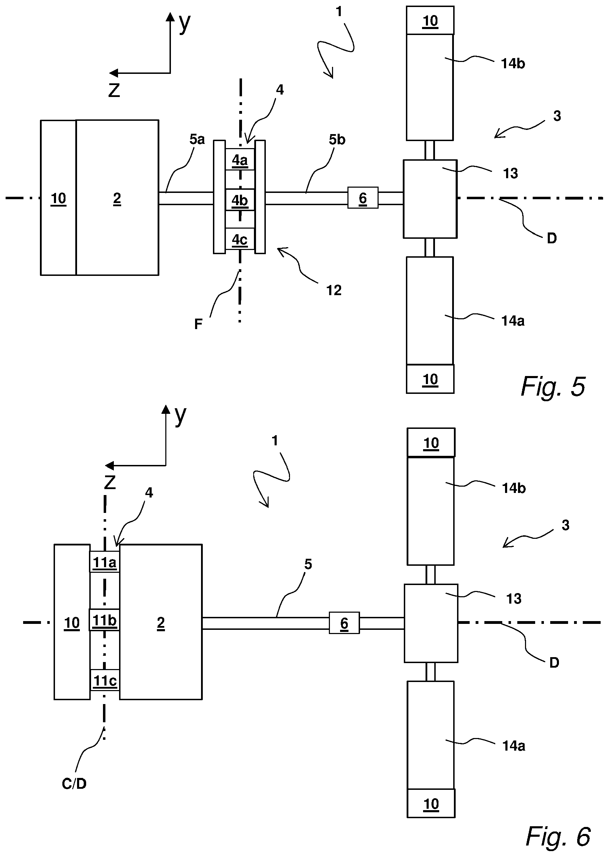

Die linke Ansicht der Fig. 1c zeigt eine Messanordnung, bei welcher die Fehlausrichtung ein reiner Parallelversatz einer Drehachse D einer Welle 5b der Belastungsmaschine 14 und einer Drehachse D' einer Welle 5a der Antriebsmaschine 2 in x-Richtung ist. Die rechte Ansicht der Fig. 1c zeigt eine Messanordnung, bei welcher die Fehlausrichtung ein reiner Winkelversatz einer Drehachse D einer Welle 5b der Belastungsmaschine 14 und einer Drehachse D' einer Welle 5a der Antriebsmaschine 2 um die y-Achse ist. Im Allgemeinen liegen Fehlausrichtungen jedoch als Überlagerung aus Winkelversatz und Parallelversatz vor. Darüber hinaus könnte die Antriebsmaschine 2 zusätzlich oder alternativ auch in y-Richtung verschoben und/oder um die x-Achse verschwenkt sein. Darüber hinaus könnten die Messelemente auch an der Antriebsmaschine 2 oder im Wellenstrang angeordnet sein, wie weiter unten in Bezug auf die Figuren 5, 6 und 7 beschrieben.

Des Weiteren sind in Fig. 1c verschiedene Ebenen A, B, F, G, H eingezeichnet. Die Ebene A ist eine Ebene, welche normal zur Drehachse D der Belastungsmaschine 14 ausgerichtet ist und in welcher zwei Messelemente 4a, 4d liegen, welche an dem von der von der Welle 5b der Belastungsmaschine 14 abgewandten Ende der Unterseite der Belastungsmaschine 14 angeordnet sind. Die Ebene B ist eine Ebene, welche ebenfalls normal zur Drehachse D der Belastungsmaschine 14 ausgerichtet ist und in welcher zwei Messelemente 4b, 4c liegen, welche an dem von der von der Welle 5b der Belastungsmaschine 14 zugewandten Ende der Unterseite der Belastungsmaschine 14 angeordnet sind.

Die Ebene G ist eine Ebene, welche normal zur Drehachse D' der Antriebsmaschine 2 ausgerichtet ist und in welcher ein erstes Lager der Welle 5a der Antriebsmaschine 2 liegt, welches an dem von der von der Welle 5b der Belastungsmaschine 14 zugewandten Ende der Antriebsmaschine 2 angeordnet ist. Die Ebene H ist eine Ebene, welche ebenfalls normal zur Drehachse D' der Antriebsmaschine 2 ausgerichtet ist und in welcher ein zweites Lager der Welle 5a der Antriebsmaschine 2 liegt, welches an dem von der von der Welle 5b der Belastungsmaschine 14 abgewandten Ende der Antriebsmaschine 2 angeordnet ist.

Im rechten Teil der Fig. 1c sind die Kräfte eingezeichnet, welche durch die gezeigten Fehlausrichtungen jeweils in den Ebenen A, B und F hervorgerufen werden. In den Ebenen A und B wirken die Kräfte $\vec{A}, \vec{B}$ auf die Messelemente 4a, 4b, 4c, 4d, welche die Belastungsmaschine 14 lagern. In Ebene F wirkt die Kraft $\vec{F}$ auf den (nicht dargestellten) Wellenstrang.

Fehlausrichtungen können mittels des Verfahrens sowohl in der XZ-Ebene als auch in der YZ-Ebene, insbesondere gleichzeitig, detektiert und dann korrigiert werden.

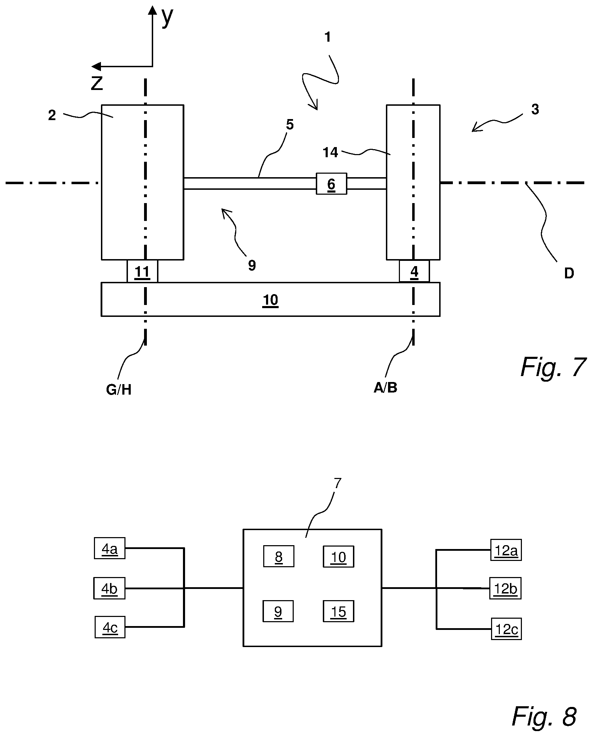

Des Weiteren weist der Prüfstand 1 vorzugsweise eine Signalverarbeitungseinrichtung 7 auf (nicht dargestellt). Diese wird weiter unten in Bezug auf Fig. 8 beschrieben.

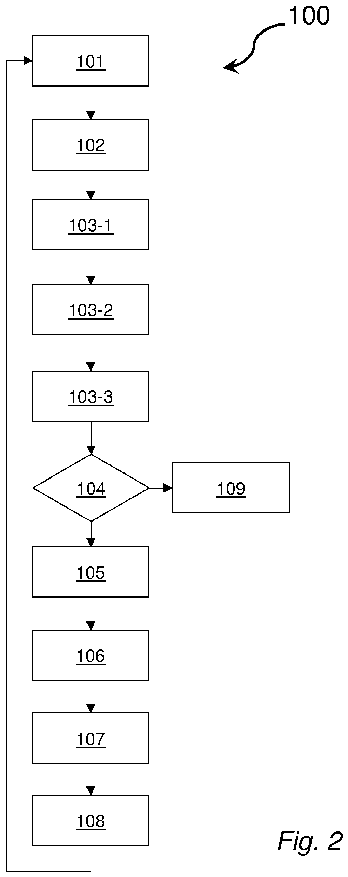

**Figur 2** zeigt ein Ausführungsbeispiel eines Verfahrens zur Korrektur einer Fehlausrichtung, welches bei einer Messanordnung gemäß der Figuren 1a bis 1c zum Einsatz kommen kann.

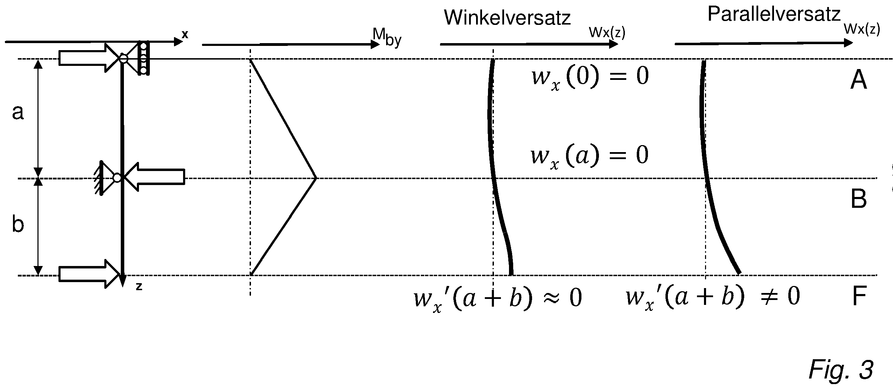

Nach einer Installation der Messanordnung wird diese vorzugsweise zunächst kalibriert. Hierfür wird insbesondere ein Skalierungsfaktor oder eine Konstante, insbesondere das Produkt aus E-Modul und Widerstandsmoment, bevorzugt eine Steifigkeitskonstante, des Wellenstrangs 5; 5a, 5b bestimmt. Dieser Skalierungsfaktor oder diese Materialkonstante dient vorzugsweise zur Berechnung der Biegelinie, wie weiter unten in Bezug auf Fig. 3 erläutert wird. Weiter vorzugsweise wird der Skalierungsfaktor oder die Materialkonstante durch zwei Kraftmessungen mit jeweils verschiedener Relativposition der Antriebsmaschine 2 und der Belastungsmaschine 14 zueinander ermittelt.

In einem ersten Arbeitsschritt 101 des Verfahrens 100 wird eine Kraftmessung in den Ebenen A, B und/oder normal zu den Ebenen A, B, durchgeführt. Die Ebenen A, B werden von der Drehachse D der Welle 5b des Wellenstrangs 5; 5a, 5b, welche die Welle der Belastungsmaschine 14 ist, geschnitten. Vorzugsweise sind die Ebenen A, B wenigstens im Wesentlichen normal zu der Drehachse D ausgerichtet. Die Drehachse D ist dabei vorzugsweise, wie in Fig. 1c dargestellt, die Drehachse jener Welle 5b des Wellenstrangs 5; 5a, 5b, an welcher die Kraftmessung durchgeführt wird, d.h. in Bezug auf welche die Kräfte gemessen werden.

Weiter vorzugsweise erfolgt die Kraftmessung in stationären Zuständen oder in quasistationären Zuständen des Wellenstrangs 5; 5a, 5b. Hierdurch, können, wie bereits erläutert, Beschädigungen an der Messanordnung vermieden werden.

Weiter vorzugsweise wird die Kraftmessung kontinuierlich überwacht. Insbesondere wird hierfür der jeweils zuletzt gemessene Messwert oder mit einem Schwellenwert verglichen, welcher eine kritische Belastung des Wellenstrangs 5; 5a, 5b kennzeichnet. Wird dieser Schwellenwert überschritten, wird eine Rotation des Wellenstrangs 5; 5a, 5b angehalten wird oder keine Rotation vorgenommen wird. Des Weiteren wird das Verfahren 100 dann vorzugsweise beendet. Vorzugsweise sind, wie in Fig. 7 dargestellt, mehrere Kraftsensoren 4, 11 in dem Kraftpfad vorhanden in diesem Fall wird vorzugsweise jede der Kraftmessungen der Kraftsensoren 4, 11 überwacht.

Eine etwaige konstant umlaufende Querkraft weist auf einen Winkelversatz im Wellenstrang hin und kann mittels des erfindungsgemäßen Verfahrens daher von Fehlausrichtungen unterschieden werden.

In einem zweiten Arbeitsschritt 102 wird ein Messwert oder Messwertverlauf der Kraftmessung zur Detektion einer Fehlausrichtung des Wellenstrangs 5; 5a, 5b analysiert. Vorzugsweise wird hierbei zwischen Parallelversatz und/oder Winkelversatz des Wellenstrangs 5; 5a, 5b in Bezug auf die Fehlausrichtung unterschieden.

In einem dritten Arbeitsschritt 103 werden Zielwerte für eine Positionskorrektur der Belastungsmaschine 14 oder der Antriebsmaschine 2 ermittelt, um die Fehlausrichtung zu minimieren. Hierfür werden in einem ersten Unterschritt 103-1 Biegemomente oder ein Biegemomentverlauf an dem Wellenstrang 5; 5a, 5b auf der Grundlage des Messwerts oder der Messwertverläufe der Kraftmessung ermittelt. In einem zweiten Unterarbeitsschritt 103-2 wird dann eine Biegelinie des Wellenstrangs 5; 5a, 5b unter Berücksichtigung von Randbedingungen auf der Grundlage der ermittelten Biegemomente oder des Biegemomentverlaufs ermittelt. Die Zielwerte der Positionskorrektur werden dann mittels dieser Biegelinie ermittelt. Vorzugsweise ist die Fehlausrichtung minimal, wenn die Biegelinie $w_x(z)$ identisch zur Drehachse D ist.

In einem vierten Arbeitsschritt 104 wird geprüft, ob ein Biegemoment oder Biegemomentverlauf an dem Wellenstrang 5; 5a, 5b einen Schwellenwert überschreitet. Wenn der der Schwellenwert überschritten wird, wird das Verfahren 100 fortgesetzt und wiederholt sich. Hierfür werden die Zielwerte in einem fünften Arbeitsschritt 105 ausgegeben. Vorzugsweise erfolgt dieses Ausgeben über eine Datenschnittstelle 10 an den nächsten Arbeitsschritt. Alternativ oder zusätzlich können die Zielwerte auch über eine Benutzerschnittstelle 10 an einen Benutzer ausgegeben werden.

Wird der Schwellenwert nicht mehr überschritten, wird das Verfahren 100 vorzugsweise in einem neunten und letzten Arbeitsschritt 109 beendet.

Bei Fortsetzung des Verfahrens 100 wird der Kraftschlusses zwischen der Belastungsmaschine 14 und der Antriebsmaschine 2 in einem sechsten Arbeitsschritt 106 vorzugsweise unterbrochen, insbesondere durch Öffnen einer Kupplung (nicht dargestellt) des Wellenstrangs 5; 5a, 5b. Hierdurch kann die Relativposition der beiden Maschinen 2, 14 zueinander ohne Gegenkräfte verändert werden.

In einem siebten Arbeitsschritt 107 wird eine Position der Belastungsmaschine 14 und/oder der Antriebsmaschine 2 auf dem Prüfstand auf der Grundlage der ausgegebenen Zielwerte verändert. Hierdurch sollte sich eine Verringerung der Fehlausrichtung ergeben.

In einem achten Arbeitsschritt 108 wird dann der Kraftschlusses zwischen der Belastungsmaschine 14 und der Antriebsmaschine 2 vorzugweise wiederhergestellt. Vorzugsweise beginnt das Verfahren 100 danach wieder beim ersten Arbeitsschritt 101. Alternativ kann das Verfahren 100 aber auch schon nach einem früheren Arbeitsschritt wieder von vorn beginnen.

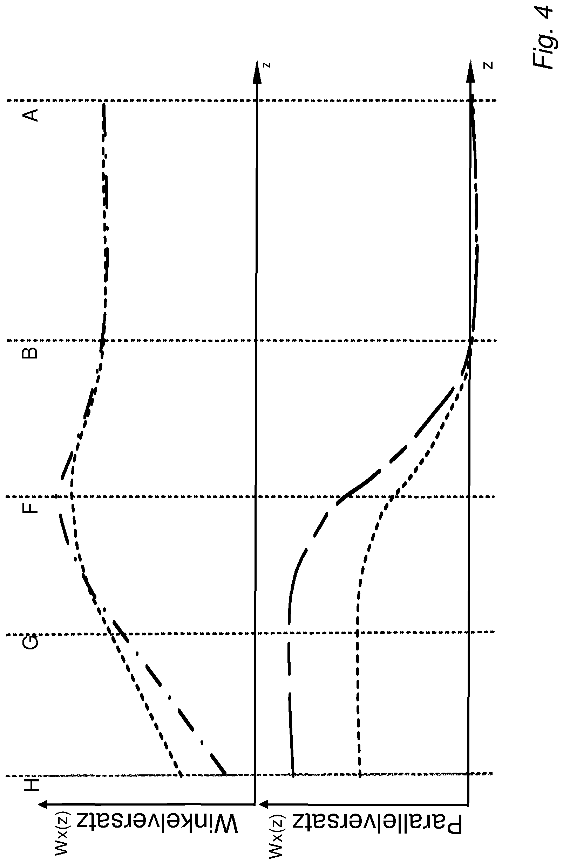

Anhand der Figuren 3 und 4 wird nachfolgend eine beispielhafte Berechnung von Zielwerten auf der Grundlage der in den Ebenen A und B oder in Ebene F gemessenen Kräfte erläutert.

Sind die fest gelagerten Antriebsmaschine 2 und die Belastungsmaschine 14 mechanisch über den Wellenstrang verbunden, so entsteht ein Kraftschluss, welcher vereinfacht als Biegeträger (unter Annahme einer Fest-Loslager Wellenanordnung, wie in den Figuren 1c und 3 dargestellt) angenommen werden kann.

Je nach Ort der Kraftflussmessung, in dem dargestellten Fall in den Ebenen A und B oder in der Ebene F, können aus einem entstandenen Momentengleichgewicht Lagerkräfte $\vec{A}$ und $\vec{B}$ oder eine Fehlausrichtungskraft $\vec{F}$ berechnet werden.

Die Kraftkomponenten $F_x$ und $F_y$ und die Kraftkomponente $F_z$ sowie Momentenkomponenten $M_{bx}$ und $M_{by}$ zur Bestimmung einer Fehlausrichtung können in an sich bekannter Weise mittels der gezielten Anordnung von Vorzugsrichtungen der einzelnen Messelemente 4a, 4b, 4c bzw. deren Piezoelemente erreicht werden.

Auch andere Verfahren zur Bestimmung dieser Parameter können zum Einsatz kommen. Beispielsweise eine Zerlegung, insbesondere orthogonale Zerlegung, der Messsignale der einzelnen Messelemente 4a, 4b, 4c oder der aus den Messsignalen abgeleiteten, das heißt gemessenen Kräfte $F_1$, .., $F_i$.

Hierbei sind beispielsweise die zu bestimmenden Parameter $M_z$, $F_X$, $F_Y$ die Lösung eines Gleichungssystems, wobei für jedes Messsignal eine Gleichung wie folgt gilt:

$$S1 = a_{11} \cdot M_z + a_{12} \cdot F_x + a_{13} \cdot F_y$$

$$S2 = a_{21} \cdot M_z + a_{22} \cdot F_x + a_{23} \cdot F_y$$

$$S3 = a_{31} \cdot M_z + a_{32} \cdot F_x + a_{33} \cdot F_y$$
$$\vdots$$

$$SN = a_{N1} \cdot M_z \ldots$$

S1, S2, ...Si, ..., SN sind hierbei die Messsignale der einzelnen Messelemente 4a, 4b, 4c, ...2, N. Jeder Koeffizient a hängt von mehreren Faktoren ab, wie beispielsweise der jeweiligen Position des Messelements 4a, 4b, 4c, ...4i, 4N und der Orientierung der jeweiligen Vorzugsrichtung im Bezugssystem, einer Empfindlichkeit des jeweiligen Messelements 4a, 4b, 4c,..., 4i,...,N und einem möglichen Signalverlust durch einen Kraftnebenschluss über ein Befestigungsmittel.

Um ein solches Gleichungssystem für das Drehmoment $M_z$, eine erste Querkraftkomponente $F_x$ und eine zweite Querkraftkomponente $F_y$ aufzulösen, werden Messsignale von wenigstens drei Messelemente 4a, 4b, 4c, deren Vorzugsrichtungen in der Weise ausgerichtet sind, dass sie in einer einzigen Ebene liegen, benötigt. Darüber hinaus dürfen wenigstens zwei der Vorzugsrichtungen weder parallel noch antiparallel ausgerichtet sein.

Für diesen beschriebenen allgemeinen Fall mit N = 3, d. h. mit drei Messelementen 4a, 4b, 4c ist die Lösung des oben dargestellten Gleichungssystems eindeutig. Werden weitere Messelemente zu dem Messsystem 1 hinzugefügt, so ist das Gleichungssystem mit drei zu bestimmenden Parametern $M_z$, $F_x$, $F_y$ überbestimmt, die Messgenauigkeit kann jedoch nochmals verbessert werden.

Im Fall von N = 4 können vier verschiedene Gleichungssysteme F (S1, S2, S3), F (S1, S2, S4), F (S1, S3, S4), F (S2, S3, S4) aufgestellt werden. Die für die einzelnen zu bestimmenden Parameter $M_z$, $F_x$, $F_y$ bestimmten Werte können dann addiert und gemittelt werden, d. h. in dem Fall von vier Messelementen 4a, 4b, 4c, ..., 4i, ...,4N durch vier dividiert werden. In ähnlicher Weise kann ein überbestimmtes Gleichungssystem F (S1, S2 ..., SN) aufgestellt werden, welches mittels einer Minimierungsaufgabe gelöst wird.

Ist eine allgemeine Lösung für das Gleichungssystem gefunden, kann die Berechnung der zu bestimmenden Parameter $M_z$, $F_x$, $F_y$ auf eine Matrixmultiplikation reduziert werden. Diese hat drei Zeilen und so viele Spalten, wie Messsignale S1, S2, S3, ... SN zur Verfügung stehen. Die Matrixelemente bzw. Koeffizienten bilden die jeweiligen Beiträge der einzelnen Sensoren zu den zu bestimmenden Parametern $M_z$, $F_x$, $F_y$ ab.

$$\begin{pmatrix} Fx \\ Fy \\ Mz \end{pmatrix} = K \begin{pmatrix} c11 & c12 & c13 & \ldots c1N \\ c21 & c22 & c23 & \ldots c2N \\ c31 & c32 & c33 & \ldots c3N \end{pmatrix} \begin{pmatrix} S1 \\ S2 \\ S3 \\ \ldots SN \end{pmatrix}$$

Mittels einer solchen Zerlegung können darüber hinaus die Biegemomente $M_{bx}$ und $M_{by}$ bestimmt werden.

Für die Zerlegung der Messsignale S1, S2, ...Si, ..., SN in Komponenten, welche zu den jeweiligen zu bestimmenden Parametern $M_z$, $F_x$, $F_y$ beitragen, ist es notwendig, dass die Lage der Messelemente 4a, 4b, 4c, ..., 4i, ...,4N und die Orientierung der Vorzugsrichtungen bekannt ist.

Die geometrischen Parameter können entweder aus einer Konstruktionszeichnung des Antriebsstrangprüfstands 1 und aus der Kenntnis der Vorzugsrichtungen der Messelemente 4a, 4b, 4c, ..., 2i, ..., 2N bestimmt werden.

Die Orientierung der Vorzugsrichtungen der Messelemente 4a, 4b, 4c, ..., 4i, ...,4N kann jedoch auch durch Ausmessen der Vorzugsrichtungen mittels einer Kalibrierungsmessung bestimmt werden. Vorzugsweise wird der Kraftsensor 4, 11 hierfür zwischen zwei ebene Platten eingespannt. In einem nächsten Schritt werden externe Querkräfte mit bekannter Richtung aufgebracht. Aus der Größe der einzelnen Messsignale S1, S2,...Si,..., SN im Verhältnis zum Betrag und zu der Richtung der eingeleiteten Querkräfte kann die Vorzugsrichtung der Messelemente 4a, 4b, 4c,..., 4i,...,4N in der Ebene, welche durch die Vorzugsrichtung der Messelemente 4a, 4b, 4c,..., 4i,...,4N aufgespannt wird, bestimmt werden.

Mittels einer solchen Zerlegung kann durch das Aufbringen eines definierten Drehmoments $M_z$ und das Messen der einzelnen Messsignale S1, S2,...Si,..., SN ein Abstand der Messelemente 4a, 4b, 4c,..., 4i,...,4N von der Drehachse D bestimmt werden, wenn die Vorzugsrichtungen der einzelnen Messelemente 4a, 4b, 4c,..., 4i,...,4N bekannt sind.

Wie in **Fig. 3** dargestellt, kann auf der Grundlage der ermittelten Kräfte $\vec{A}, \vec{B}, \vec{F}$ das Biegemoment $M_{by}(z)$ in Abhängigkeit des Orts in Richtung der Drehachse D der Belastungsmaschine 14, im gezeigten Bezugssystem in Richtung der z-Achse, ermittelt werden.

Die Beziehung zwischen der Biegelinie $w_x(z)$ und dem Biegemoment $M_{by}(z)$ gehorcht dabei folgender Differentialgleichung

$$w_x(z)\,'' = -\frac{M_{by}(z)}{E\,J_y}$$

wobei F das Elastizitätsmodul und $J_y$ das Widerstandsmoment der Messanordnung ist. Beide bilden zusammen einen sogenannten Skalierungsfaktor, welcher für einen bestimmten Wellenstrang oder eine bestimmte Messanordnung konstant ist. Der Skalierungsfaktor berücksichtigt eine Steifheit und eine Materialkonstante des jeweiligen Wellenstrangs oder Wellenabschnitts oder der jeweiligen Messanordnung.

Die Differentialgleichung kann jeweils durch eine Polynomfunktion $w_x(z)$ gelöst werden. Diese Polynomfunktion $w_x(z)$ gibt die Biegelinie an. Bei mehreren Wellenabschnitten 5a, 5b des Wellenstrangs können entsprechend viele Polynome $w_x(z)$ unter Einbindung der jeweiligen Anschlussbedingungen bei der Lösung des gekoppelten Differentialgleichungssystems $w_x(z)$ " bestimmt werden.

Der Skalierungsfaktor kann durch Vorgabe von Randbedingungen für die Biegelinie $w_x(z)$ experimentell bestimmt werden. In dem in den Figuren 1c und 3 dargestellten

Fall gibt es beispielsweise die Randbedingungen, dass $w_x(0) = 0$ und $w_x(a) = 0$ sind. Darüber hinaus ist die Ableitung bei der Biegelinie für den Winkelversatz jedenfalls an der Stelle $z = a + b$ null, d.h. $w'_x(a + b) = 0$. Durch zwei Messungen der Kräfte bei verschiedenen Relativausrichtungen der Antriebsmaschine 2 und der Belastungsmaschine 14 zueinander kann der Skalierungsfaktor dann berechnet werden. Alternativ kann der Skalierungsfaktor aber auch durch eine FEM-Simulation des Wellenstrangs oder der Messanordnung abgeschätzt werden.

**Figur 4** zeigt jeweils zwei verschiedene Biegelinien $w_x(z)$ für einen reinen Winkelversatz der Drehachsen D, D' aus Fig. 1c (Fig. 4 oben) und einen reinen Parallelversatz der Drehachsen D, D' aus Fig. 1c (Fig. 4 unten), welche mittels des dargelegten Berechnungsverfahrens bestimmt sind. Die strichpunktierte Linie gibt jeweils die Biegelinie bei einem stärkeren Winkelversatz und Parallelversatz als die gestrichelte Linie an.

Selbstverständlich können auch separate Parallelversätzen in y-Richtung und Winkelversätzen durch Rotation um die x-Achse auftreten, welche Biegelinien $w_y(z)$ hervorrufen. Durch Superposition kann dann deine zwei-dimensionale Biegelinie $w_{xy}(z)$ berechnet werden. Diese Superposition ist vorzugsweise eine Addition der Biegelinien, welche aufgrund ihrer Orientierung Vektoren sind, also eine Vektoraddition.

Die Figuren 5 bis 7 zeigen weitere Ausführungsbeispiele von Antriebsstrangprüfständen 1. Auch wenn die Anordnung des Kraftsensors oder der Kraftsensoren in diesen Ausführungsbeispielen zum Teil erheblich von der in Bezug auf das erste Ausführungsbeispiel der Fig. 1 dargestellten Anordnung abweicht, kann eine Berechnung der Biegemomente und Biegelinien des Antriebsstrangs auf jene Berechnungsmethode zurückgeführt werden, welche im Vorhergehenden in Bezug auf die Figuren 3 und 4 erläutert wurde.

**Fig. 5** zeigt ein zweites Ausführungsbeispiel eines Antriebsstrangprüfstands 1, auf welchem zusätzlich zu Kalibrations- oder Applikationstests eine Detektion von Fehlausrichtungen möglich ist. Insbesondere kann eine Fehlausrichtung unabhängig vom Prüfstandsbetrieb detektiert werden.

Der Antriebsstrangprüfstand 1 weist unter anderem Belastungsmaschinen bzw. Dynos 14a, 14b auf, welche mit einem Abtrieb eines Antriebsstrangs, wie in Fig. 1 gezeigt, drehfest verbindbar sind.

Des Weiteren weist der Antriebsstrangprüfstand 1 vorzugsweise einen Inkrementalgeber 6 auf, welcher eingerichtet ist, einen Drehwinkel des Wellenstrangs 5a, 5b zu messen. Die Funktion eines Inkrementalgebers 6 ist aus dem Stand der Technik bekannt, insbesondere kann dieser den Drehwinkel des Wellenstrangs 5a, 5b oder eine Drehwinkeländerung und/oder -richtung photoelektrisch, magnetisch und/oder mit Schleifkontakten bestimmen.

Darüber hinaus verfügt der Antriebsstrang 1 vorzugsweise über einen Kraftsensor 4, welcher vorzugsweise wiederum mehrere piezoelektrische Messelemente, in Fig. 1 drei piezoelektrische Messelemente 4a, 4b, 4c aufweist. Die Messelemente 4a, 4b, 4c sind in dem Ausführungsbeispiel nach Fig. 1 an einem Messflansch 12 angeordnet, welcher Teil des Antriebsprüfstands 1 oder des Antriebsstrangs 3 sein kann. Weiter vorzugsweise können als Messelemente 4a, 4b, 4c auch Dehnungsmessstreifen zum Einsatz kommen.

Der Messflansch verbindet einen ersten Wellenabschnitt 5a mit einem zweiten Wellenabschnitt 5b des Wellenstrangs 3. Der Wellenstrang 5a, 5b rotiert um eine Drehachse D, welche in Fig. 5 strichpunktiert angegeben ist.

Die Antriebsmaschine 2 kann sowohl ein Bestandteil des Antriebsstrangprüfstands 1 oder des Antriebsstrangs 3 sein, je nachdem, welche Komponenten eines Antriebsstrangs 3 auf dem Antriebsstrangprüfstand 1 getestet werden sollen.

In dem in Fig. 5 gezeigten Ausführungsbeispiel weist der Antriebsstrang 3 die Antriebsmaschine 2, den Wellenstrang 5a, 5b, ein Differential 13 sowie Achsabschnitte (kein

Bezugszeichen) auf. Von der Antriebsmaschine 2 kann ein Leistungsfluss über den ersten Wellenabschnitt 5a, den Messflansch 12, den ersten piezoelektrischen Kraftsensor, das Differential 13 und die Achsabschnitte an die Belastungsmaschinen 14a, 14b übertragen werden.

Der Prüfstand 1 weist des Weiteren eine Abstützvorrichtung 10 auf, auf welcher der Antriebsprüfstand als Ganzes, einzelne Elemente des Antriebsstrangprüfstands 1 und/oder auch der Antriebsstrang 3 gelagert sind. Die Abstützvorrichtung 10 kann hierbei mechanische Strukturen aufweisen, um die einzelnen Elemente beispielsweise auf dem Boden einer Prüfstandshalle zu lagern. Weiter vorzugsweise kann die Abstützvorrichtung 10 eine Grundplatte aufweisen oder als solche ausgebildet sein.

In dem in Fig. 1 gezeigten Ausführungsbeispiel sind wenigstens die Antriebsmaschine 2 und die Leistungsmaschinen 14a, 14b durch die Abstützvorrichtung 10 gelagert.

Durch den Leistungsfluss, welcher vorzugsweise von der Antriebsmaschine 2 erzeugt wird, wird ein Kraftfluss verursacht, welcher sich in dem in Fig. 1 gezeigten Ausführungsbeispiel von der Abstützvorrichtung 10 über die Antriebsmaschine 2 und den Antriebsstrang 3, die Belastungsmaschinen 14a, 14b wiederum bis zu der Abstützvorrichtung 10 erstreckt. Die Abstützvorrichtung 10 stellt hierbei jeweils die Reaktionskräfte zum Abstützen der Antriebsmaschine 2 und der Belastungsmaschine 14a, 14b bereit.

Die Messelemente 4a, 4b, 4c sind vorzugsweise in der Weise eingerichtet und ausgebildet, um Kräfte in der Ebene F, das heißt einer Ebene parallel zu der XY-Ebene des eingezeichneten Bezugssystems zu messen. Der erste Kraftsensor 4 weist vorzugsweise Piezoelemente 4a, 4b, 4c auf, welche den piezoelektrischen Schereffekt ausnutzen. In dem gezeigten Ausführungsbeispiel werden Kräfte bzw. Drehmomente an dem Messflansch 12 über Stirnflächen der Messelemente 4a, 4b, 4c in die Piezoelemente 4a, 4b, 4c eingeleitet. Die Stirnflächen der Piezoelemente 4a, 4b, 4c sind hierbei vorzugsweise reibschlüssig mit einer Oberfläche des Messflansches 12 verbunden.

Liegt eine Kraft in X-Richtung und/oder eine Kraft in Y-Richtung des Bezugssystems am Messflansch 12 an, so erzeugen die piezoelektrischen Messelemente 4a, 4b, 4c mittels des piezoelektrischen Schereffekts entsprechende Messsignale. Gleiches gilt, wenn ein in Z-Richtung wirkendes Drehmoment an dem Messflansch 12 anliegt.

Alternativ oder zusätzlich können die Messelemente 4a, 4b, 4c eine Kraftmessung senkrecht zu der ersten Ebene F durchführen. Hierfür nutzen die Messelemente 4a, 4b, 4c vorzugsweise den piezoelektrischen Longitudinaleffekt oder den piezoelektrischen Transversaleffekt aus. Werden sowohl Kräfte in der ersten Ebene F als auch normal dazu gemessen, so sind vorzugsweise sowohl Messelemente vorhanden, welche in Z-Richtung messen, als auch Messelemente, welche in X- oder XY-Ebene Kräfte messen können. Weiter vorzugsweise weist jedes der Messelemente 4a, 4b, 4c wenigstens zwei Piezoelemente auf, welche in Bezug auf den Kraftfluss in Reihe geschaltet sind, wobei ein erstes Piezoelement den piezoelektrischen Schereffekt und ein zweites Piezoelement den piezoelektrischen Transversal- oder Longitudinaleffekt ausnutzt.

**Fig. 6** zeigt ein drittes Ausführungsbeispiel eines Prüfstands 1, mittels welchem im Prüfstandsbetrieb eine Fehlausrichtung eines Wellenstrangs detektiert werden kann.

Der Prüfstand 1 des zweiten Ausführungsbeispiels von Fig. 6 unterscheidet sich von dem zweiten Ausführungsbeispiel von Fig. 5 im Wesentlichen dadurch, dass ein Kraftsensor 11 nicht im Leistungsfluss zwischen der Antriebsmaschine 2 und den Belastungsmaschinen 14a, 14b angeordnet ist, sondern zwischen der Abstützvorrichtung 10 und der Antriebsmaschine 2.

Der erste Kraftsensor 4 misst durch diese Anordnung die Reaktionskraft, welche durch die Abstützvorrichtung 10 auf die Antriebsmaschine 2 ausübt, wenn zwischen Wellenstrang 5 und der Antriebsmaschine 2 ein Drehmoment anliegt.

Der Kraftsensor 11 kann hierbei vorzugsweise, wie in Fig. 6 dargestellt, in axialer Richtung der Drehachse D gelagert werden. Genauso könnte die Antriebsmaschine 2 aber auch, wie in der Draufsicht nach Fig. 1a, Fig. 1b oder Fig. 7 gezeigt, seitlich durch den Kraftsensor 11 gelagert werden, nach unten oder nach oben hin. Je nachdem, wie die piezoelektrischen Messelemente 11a, 11b, 11c an der Antriebsmaschine 2 angreifen, kommen dann Elemente mit piezoelektrischen Schereffekt, piezoelektrischen Longitudinal- oder Quereffekt oder, wie bereits in Bezug auf Fig. 5 erläutert, mit zwei verschiedenen Effekten zum Einsatz.

Auch in dem Ausführungsbeispiel nach Fig. 6 werden Kräfte vorzugsweise in einer Ebene C; D und/oder senkrecht zu der Ebene G; H gemessen.

Auch ist es möglich, das zweite Ausführungsbeispiel nach Fig. 5 mit dem dritten Ausführungsbeispiel nach Fig. 6 zu kombinieren: So könnte beispielsweise auch das zweite Ausführungsbeispiel ein Messflansch 12 aufweisen, an welchem ein weiterer piezoelektrischer Kraftsensor angeordnet ist. Dieser zweite piezoelektrische Kraftsensor könnte dann eine zweite Ebene F zum Messen von Kräften und/oder Momenten definieren.

Des Weiteren könnten weitere piezoelektrische Kraftsensoren zur Messung der Reaktionskräfte an den Belastungsmaschinen 14a, 14b vorhanden sein und auch diese weiteren piezoelektrischen Kraftsensoren könnten vorzugsweise die jeweilige Belastungsmaschine 14a, 14b gegenüber der Abstützvorrichtung, insbesondere gegenüber einer Grund- oder Bodenplatte 10 lagern, so dass auch hier die Reaktionskräfte zwischen den Belastungsmaschinen 14a, 14b und der Abstützvorrichtung 10 gemessen werden könnten.

Die Messung von Reaktionskräften nach Fig. 6 hat gegenüber der direkten Messung von Kräften in dem Wellenstrang 5 den Vorteil, dass der jeweilige Kraftsensor 4 keinen Einfluss auf das Trägheitsmoment und die Wucht des Wellenstrangs 5 hat.

Ein viertes Ausführungsbeispiel eines Antriebsstrangprüfstands mittels welchem eine Fehlausrichtung eines Wellenstrangs detektiert werden kann, ist in **Fig. 7** gezeigt.

Der Antriebsstrang 3 weist lediglich einen Wellenstrang 5 sowie gegebenenfalls eine Antriebsmaschine 2 auf. Im Unterschied zu dem ersten Ausführungsbeispiel eines Prüfstands nach Fig. 1 werden sowohl Reaktionskräfte der Belastungsmaschine 14 als auch der Antriebsmaschine 2 gegenüber der Stützvorrichtung 10 gemessen, vorzugsweise in Bezug auf wenigstens eine Messebene A, B an der Belastungsmaschine 14 und in Bezug auf wenigstens eine Messebene G, H an der Antriebsmaschine 2.

Genauso wie in dem Ausführungsbeispielen nach den Fig. 5 und 6 können aber auch die Antriebsstränge 1 gemäß dem ersten Ausführungsbeispiel oder gemäß dem zweiten Ausführungsbeispiel weitere Elemente aufweisen, insbesondere ein Getriebe bzw. Differenzial, Achsabschnitte, etc..

Auch in diesem Ausführungsbeispiel könnte jedoch vorgesehen sein, dass der jeweilige Kraftsensor 4, 11 zwei in Bezug auf den Kraftfluss in Reihe geschaltete Elemente aufweist, so dass zwei verschiedene Messrichtungen, insbesondere zwei zueinander orthogonale Messrichtungen, möglich sind. Insbesondere könnten diese Messrichtungen in Y- und X-Richtung ausgerichtet sein. Durch ein drittes Piezoelement in den Messelementen der Kraftsensoren 4, 11 könnte auch eine Kraft in Z-Richtung gemessen werden.

**Figur 8** zeigt ein Detail eines Antriebsstrangprüfstand 1 gemäß der Figuren 1, 5, 6 oder 7 oder einer separaten Steuereinheit, welche eingerichtet ist, den Antriebsstrangprüfstand 1 zu steuern.

Eine Signalverarbeitungseinrichtung 7 weist Mittel 8, eingerichtet zum Analysieren eines Messwerts oder eines Messwertverlaufs der Kraftmessung zur Detektion einer Fehlausrichtung des Wellenstrangs 5; 5a, 5b, Mittel 9 zum Ermitteln von Zielwerten für eine Positionskorrektur der Belastungsmaschine oder der Antriebsmaschine, um die Fehlausrichtung zu minimieren und Mittel 10, insbesondere einer Schnittstelle, zum Ausgeben der Zielwerte, auf. Weiter vorzugsweise weist die Signalverarbeitungseinrichtung 7 Mittel 15 auf, welche die Verstelleinrichtung 12a, 12, 12c auf der Grundlage der ausgegebenen Zielwerte steuern. Die Signalverarbeitungseinrichtung 7 ist sowohl mit den Messelementen 4a, 4b, 4c des Kraftsensors wie auch mit der Verstelleinrichtung 12a, 12, 12c signaltechnisch verbunden.

Bei den vorher beschriebenen Ausführungsbeispielen handelt es sich lediglich um Beispiele, die den Schutzbereich und die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und die Anordnung der beschriebenen Bestandteile vorgenommen werden können, ohne den Schutzbereich zu verlassen, wie er sich aus den Ansprüchen dieser und äquivalenter Merkmalskombinationen ergibt. Insbesondere können einzelne Ausführungsbeispiele im Rahmen der in den Ansprüchen definierten Erfindung miteinander kombiniert werden, insbesondere in Bezug auf den Antriebsstrangprüfstand oder die Messanordnung. So können insbesondere auch die Ausführungsbeispiele des Antriebsstrangprüfstands der Figuren 5, 6 und 7 eine Verstelleinrichtung 12a, 12b ,12c aufweisen. Auch die Reihenfolge der Arbeitsschritte des beschrieben Verfahrens 100 kann von der dargestellten abweichen. Ebenso kann die Kraftmessung, insbesondere an der Welle, durch Sensoren erfolgen, welche auf Dehnungsmessstreifen basieren.

**Bezugszeichenliste**

| 1 | Antriebsstrangprüfstand |
| 2 | Antriebsmaschine |
| 3 | Antriebsstrang |
| 4 | Erster piezoelektrischer Kraftsensor |
| 4a, 4b, 4c | Piezoelektrische Messelemente |
| 5, 5a, 5b | Wellenstrang |
| 6 | Inkrementalgeber |
| 7 | Signalverarbeitungseinrichtung |
| 8, 9, 10, 15 | Mittel der Signalverarbeitungseinrichtung |
| 11 | Zweiter piezoelektrischer Kraftsensor |
| 12 | Messflansch |
| 13 | Differential/Getriebe |
| 14, 14a, 14b | Belastungsmaschine |

**Patentansprüche**

1. Verfahren (100) zur Korrektur einer Fehlausrichtung wenigstens eines Wellenstrangs (5, 5a, 5b) eines Antriebsstrangs (3) auf einem Prüfstand (1), wobei wenigstens ein piezoelektrischer Kraftsensor (4a, 4b, 4c, 4d) in einem Kraftpfad angeordnet ist, über welchen bei einer Leistungsübertragung zwischen einer Belastungsmaschine (14; 14a, 14b) des Prüfstands (1) und einer Antriebsmaschine (2) des Antriebsstrangs (3) oder des Prüfstands (1) mittels des Wellenstrangs (5; 5a, 5b) ein Kraftfluss übertragbar ist, folgende Arbeitsschritte aufweisend:

    Durchführen (101) einer Kraftmessung in wenigstens einer Ebene (A, B; F) und/oder normal zu der wenigstens einen Ebene (A, B; F), welche von einer Drehachse (D) des Wellenstrangs (5; 5a, 5b) geschnitten wird und vorzugsweise wenigstens im Wesentlichen normal zu der Drehachse (D) liegt;
    Analysieren (102) eines Messwerts oder eines Messwertverlaufs der Kraftmessung zur Detektion einer Fehlausrichtung des Wellenstrangs (5; 5a, 5b);
    Ermitteln (103) von Zielwerten für eine Positionskorrektur der Belastungsmaschine (14; 14a, 14b) oder der Antriebsmaschine (2), um die Fehlausrichtung zu minimieren; wobei die Zielwerte eine Richtung und einen Betrag angeben, um die ein auszurichtendes Bauteil verschoben und/oder gedreht werden soll, oder einen Absolutwert einer Richtung und einer Position angeben, zu welchen das auszurichtende Bauteil verschoben und/oder gedreht werden soll;
    wobei zum Ermitteln der Zielwerte (103) die beiden folgenden weiteren Arbeitsschritte ausgeführt werden:

    Ermitteln (103-1) von Biegemomenten oder eines Biegemomentverlaufs an dem Wellenstrang (5; 5a, 5b) auf der Grundlage des Messwerts oder der Messwertverläufe der Kraftmessung;
    Ermitteln (103-2) einer Biegelinie des Wellenstrangs (5; 5a, 5b) auf der Grundlage der ermittelten Biegemomente oder des Biegemomentverlaufs, wobei die Zielwerte mittels der Biegelinie ermittelt werden; und
    Ausgeben (105) der Zielwerte.

2. Verfahren (100) nach Anspruch 1, des Weiteren die folgenden Arbeitsschritte aufweisend:

    Prüfen (104), ob ein Biegemoment oder Biegemomentverlauf an dem Wellenstrang (5; 5a, 5b) einen Schwellenwert überschreitet; und
    Iteratives Wiederholen des Verfahrens (100), wenn der der Schwellenwert überschritten wird, oder Beenden (109) des Verfahrens (100), wenn der Schwellenwert nicht überschritten wird.

3. Verfahren (100) nach einem der vorhergehenden Ansprüche 1 oder 2, des Weiteren den folgenden Arbeitsschritt aufweisend:
    Lösen (106) eines Kraftschlusses zwischen der Belastungsmaschine (14) und der Antriebsmaschine (2), insbesondere durch Öffnen einer Kupplung des Wellenstrangs (5; 5a, 5b).

4. Verfahren (100) nach einem der vorhergehenden Ansprüche 1 bis 3, des Weiteren den folgenden Arbeitsschritt aufweisend:
    Verändern (107) einer Position der Belastungsmaschine (14) und/oder der Antriebsmaschine (2) auf dem Prüfstand auf der Grundlage der ausgegebenen Zielwerte.

5.  Verfahren (100) nach einem der vorhergehenden Ansprüche 1 bis 4, des Weiteren den folgenden Arbeitsschritt aufweisend:
Herstellen (108) eines Kraftschlusses zwischen der Belastungsmaschine (14) und der Antriebsmaschine (2).

6.  Verfahren (100) nach einem der vorhergehenden Ansprüche 1 bis 5, wobei eine Konstante, insbesondere das Produkt aus E-Modul und Widerstandsmoment, des Wellenstrangs (5; 5a, 5b) zur Berechnung der Biegelinien durch zwei Kraftmessungen in Bezug auf jeweils verschiedenen Positionen der Antriebsmaschine (2) oder der Belastungsmaschine (14) ermittelt wird.

7.  Verfahren (100) nach einem der vorhergehenden Ansprüche 1 bis 6, wobei die Drehachse (D) des Wellenstrangs (5; 5a, 5b) eine Drehachse jener Welle des Wellenstrangs (5; 5a, 5b) ist, an welcher die Kraftmessung durchgeführt wird.

8.  Verfahren (100) nach einem der vorhergehenden Ansprüche 1 bis 7, wobei die Kraftmessung in einem stationären Zustand oder einem quasi-stationären Zustand des Wellenstrangs (5; 5a, 5b) erfolgt.

9.  Verfahren (100) nach einem der vorhergehenden Ansprüche 1 bis 8, wobei die Kraftmessung überwacht wird, indem der Messwert oder die Messwerte mit einem Schwellenwert verglichen wird oder werden, welcher eine kritische Belastung des Wellenstrangs (5; 5a, 5b) kennzeichnet, wobei, wenn der Schwellenwert überschritten wird, eine Rotation des Wellenstrangs (5; 5a, 5b) angehalten wird oder keine Rotation vorgenommen wird.

10. Verfahren (100) nach einem der vorhergehenden Ansprüche 1 bis 9, wobei mehrere Kraftsensoren (4, 11) in dem Kraftpfad vorhanden sind und wobei jede der Kraftmessungen der Kraftsensoren (4, 11) überwacht wird.

11. Verfahren (100) nach einem der vorhergehenden Ansprüche 1 bis 10, wobei beim Analysieren zwischen Parallelversatz und/oder Winkelversatz des Wellenstrangs (5; 5a, 5b) in Bezug auf die Fehlausrichtung unterschieden wird.

12. Computerprogramm, das Anweisungen umfasst, welche, wenn sie von einem Computer ausgeführt werden, diesen dazu veranlassen, die Schritte eines Verfahrens gemäß einem der Ansprüche 1 bis 11 auszuführen.

13. Computer-lesbares Medium, umfassend Befehle, die bei der Ausführung durch einen Computer, diesen veranlassen, die Schritte eines Verfahrens gemäß einem der Ansprüche 1 bis 11 auszuführen.

14. Antriebsstrangprüfstand (1) aufweisend:

    eine Belastungsmaschine (14a, 14b), welche mit einem zu testenden Wellenstrang (5; 5a, 5b) verbindbar ist;
    wenigstens ein piezoelektrischer Kraftsensor (4a, 4b, 4c, 4d), welcher in einem Kraftpfad angeordnet ist, über welchen bei einer Leistungsübertragung von der Belastungsmaschine (14a, 14b) des Prüfstands (1) über den Wellenstrang (5; 5a, 5b) ein Kraftfluss übertragen wird, und eingerichtet ist, um eine Kraftmessung in einer Ebene (A, B; F) und/oder normal zu der Ebene (A, B; F), welche von einer Drehachse (D) des Wellenstrangs (5; 5a, 5b) geschnitten wird und vorzugsweise wenigstens im Wesentlichen normal zu der Drehachse (D) liegt, durchzuführen; und
    eine Signalverarbeitungseinrichtung (7) mit

        - Mitteln (8), eingerichtet zum Analysieren eines Messwerts oder eines Messwertverlaufs der Kraftmessung zur Detektion einer Fehlausrichtung des Wellenstrangs (5; 5a, 5b);
        - Mitteln (9) zum Ermitteln von Zielwerten für eine Positionskorrektur der Belastungsmaschine oder der Antriebsmaschine, um die Fehlausrichtung zu minimieren, wobei die Zielwerte eine Richtung und einen Betrag angeben, um die ein auszurichtendes Bauteil verschoben und/oder gedreht werden soll, oder einen Absolutwert einer Richtung und einer Position angeben, zu welchen das auszurichtende Bauteil verschoben und/oder gedreht werden soll, wobei zum Ermitteln der Zielwerte (103) die Signalverarbeitungseinrichtung weiter ausgelegt ist zum

            o Ermitteln (103-1) von Biegemomenten oder eines Biegemomentverlaufs an dem Wellenstrang (5; 5a, 5b) auf der Grundlage des Messwerts oder der Messwertverläufe der Kraftmessung; und
            o Ermitteln (103-2) einer Biegelinie des Wellenstrangs (5; 5a, 5b) auf der Grundlage der ermittelten Biegemomente oder des Biegemomentverlaufs, wobei die Zielwerte mittels der Biegelinie ermittelt werden; und

- Mitteln (10) zum Ausgeben der Zielwerte.

15. Antriebsstrangprüfstand (1) nach Anspruch 14, wobei der Antriebsstrangprüfstand (1) zusätzlich eine Verstelleinrichtung (12a, 12b, 12c) aufweist, eingerichtet, um eine Position der Belastungsmaschine (14a, 14b) oder der Antriebsmaschine (2) translatorisch und/oder rotatorisch zu verändern, wobei der Antriebsstrangprüfstand (1), insbesondere die Signalverarbeitungseinrichtung (7), des Weiteren aufweist:

- Mittel (15), eingerichtet zum Steuern der Verstelleinrichtung (12) auf der Grundlage der ausgegebenen Zielwerte.

**Claims**

1. Method (100) for correcting a misalignment of at least one shaft train (5, 5a, 5b) of a drive train (3) on a test bench (1), wherein at least one piezoelectric force sensor (4a, 4b, 4c, 4d) is arranged in a force path via which a force can be transmitted by means of the shaft train (5; 5a, 5b) during a power transmission between a load machine (14; 14a, 14b) of the test bench (1) and a prime mover (2) of the drive train (3) or of the test bench (1), comprising the following operating steps:

performing (101) a force measurement in at least one plane (A, B; F) and/or normal to said at least one plane (A, B; F) which is intersected by an axis of rotation (D) of the shaft train (5; 5a, 5b) and is preferably arranged at least substantially normal to the axis of rotation (D);
analyzing (102) a measured value or a sequence of measured values of the force measurement for detecting a misalignment of the shaft train (5; 5a, 5b); determining (103) target values for a position correction of the load machine (14; 14a, 14b) or the prime mover (2) to minimize the misalignment; wherein the target values indicate a direction and an amount by which a component to be aligned is to be displaced and/or rotated, or indicate an absolute value of a direction and a position to which the component to be aligned is to be displaced and/or rotated; wherein for determining the target values (103) the following two further operating steps are carried out:

determining (103-1) bending moments or a sequence of bending moments on the shaft train (5; 5a, 5b) on the basis of the measured value or the sequence of measured values of the force measurement;
determining (103-2) a bending moment diagram of the shaft train (5; 5a, 5b) on the basis of the determined bending moments or the sequence of bending moments, wherein the target values are determined by means of the bending moment diagram; and
outputting (105) the target values.

2. Method (100) according to claim 1, further comprising the following steps:

checking (104) whether a bending moment or a sequence of bending moments on the shaft train (5; 5a, 5b) exceeds a threshold value; and
iteratively repeating the method (100) if the threshold value is exceeded, or terminating (109) the method (100) if the threshold value is not exceeded.

3. Method (100) according to one of the preceding claims 1 or 2, further comprising the following step:
releasing (106) a frictional connection between the load machine (14) and the prime mover (2), in particular by opening a clutch of the shaft train (5; 5a, 5b).

4. Method (100) according to any one of the preceding claims 1 to 3, further comprising the step:
changing (107) a position of the load machine (14) and/or the prime mover (2) on the test bench based on the outputted target values.

5. Method (100) according to any one of the preceding claims 1 to 4, further comprising the step:
establishing (108) a frictional connection between the load machine (14) and the prime mover (2).

6. Method (100) according to any one of the preceding claims 1 to 5, wherein a constant, in particular the product of Young's modulus and modulus of resistance, of the shaft train (5; 5a, 5b) is determined for calculating the bending moment diagram by two force measurements with respect to respectively different positions of the prime mover (2) or the load machine (14).

7. Method (100) according to any one of the preceding claims 1 to 6, wherein said axis of rotation (D) of the shaft train (5; 5a, 5b) is an axis of rotation of that shaft of the shaft train (5; 5a, 5b) on which the force measurement is performed.

8. Method (100) according to any one of the preceding claims 1 to 7, wherein the force measurement is performed in a stationary state or a quasi-stationary state of the shaft train (5; 5a, 5b).

9. Method (100) according to any one of the preceding claims 1 to 8, wherein the force measurement is monitored by comparing the measured value or values with a threshold value characterizing a critical load of the shaft train (5; 5a, 5b), wherein, if the threshold value is exceeded, a rotation of the shaft train (5; 5a, 5b) is stopped or no rotation is performed.

10. Method (100) according to any one of the preceding claims 1 to 9, wherein a plurality of force sensors (4, 11) is present in the force path, and wherein each of the force measurements of the force sensors (4, 11) is monitored.

11. Method (100) according to any one of the preceding claims 1 to 10, wherein analyzing distinguishes between parallel offset and/or angular offset of the shaft train (5; 5a, 5b) with respect to the misalignment.

12. A computer program comprising instructions which, when executed by a computer, cause the computer to perform the steps of a method according to any one of claims 1 to 11.

13. A computer-readable medium comprising instructions which, when executed by a computer, cause the computer to perform the steps of a method according to any one of claims 1 to 11.

14. Powertrain test bench (1) comprising:

a load machine (14a, 14b) which is connectable to a shaft train (5; 5a, 5b) to be tested;
at least one piezoelectric force sensor (4a, 4b, 4c, 4d) which is arranged in a force path via which a force is transmitted during a power transmission from the load machine (14a, 14b) of the test bench (1) via the shaft train (5; 5a, 5b), and which is arranged to perform a force measurement in a plane (A, B; F) and/or normal to said plane (A, B; F) which is intersected by an axis of rotation (D) of the shaft train (5; 5a, 5b) and is preferably arranged at least substantially normal to the axis of rotation (D); and
a signal processing device (7) with

- means (8) arranged for analyzing a measured value or a sequence of measured values of the force measurement for detecting a misalignment of the shaft train (5; 5a, 5b);
- means (9) for determining target values for a position correction of the load machine or the prime mover in order to minimize the misalignment, the target values indicating a direction and an amount by which a component to be aligned is to be displaced and/or rotated, or indicating an absolute value of a direction and a position to which the component to be aligned is to be displaced and/or rotated, wherein for determining the target values (103) said signal processing device (7) is further designed for:

o determining (103-1) bending moments or a sequence of bending moments on the shaft train (5; 5a, 5b) on the basis of the measured value or the sequence of measured values of the force measurement; and
o determining (103-2) a bending moment diagram of the shaft train (5; 5a, 5b) on the basis of the determined bending moments or the sequence of bending moments, wherein the target values being determined by means of the bending moment diagram; and

- means (10) for outputting the target values.

15. Powertrain test bench (1) according to claim 14, wherein the powertrain test bench (1) additionally comprises an adjusting device (12a, 12b, 12c), arranged to translationally and/or rotationally change a position of the load machine (14a, 14b) or the prime mover (2),
wherein the powertrain test bench (1), in particular the signal processing device (7), further comprises:

- means (15) arranged for controlling the adjusting device (12) on the basis of the outputted target values.

**Revendications**

1. Procédé (100) de correction d'un défaut d'alignement d'au moins une ligne d'arbre (5, 5a, 5b) d'une ligne d'entraînement (3) sur un banc d'essai (1),
au moins un capteur de force piézoélectrique (4a, 4b, 4c, 4d) étant disposé dans un chemin de force, par lequel un flux de force peut-être transmis lors d'une transmission de puissance entre une machine de charge (14; 14a, 14b) du banc d'essai (1) et une machine d'entraînement (2) de la ligne d'entraînement (3) ou du banc d'essai (1) au moyen de la ligne d'arbre (5; 5a, 5b), présentant les étapes de travail suivantes :

   effectuer (101) une mesure de force dans au moins un plan (A, B; F) et/ou perpendiculaire audit au moins un plan (A, B; F) qui est coupé par un axe de rotation (D) de la ligne d'arbres (5; 5a, 5b) et qui est de préférence au moins sensiblement perpendiculaire à l'axe de rotation (D);
   analyse (102) d'une valeur de mesure ou d'une courbe de valeur de mesure de la mesure de force pour détecter un défaut d'alignement de la ligne d'arbres (5; 5a, 5b) ;
   détermination (103) de valeurs cibles pour une correction de position de la machine de charge (14; 14a, 14b) ou de la machine d'entraînement (2), afin de minimiser le défaut d'alignement ; les valeurs cibles indiquant une direction et une quantité dont un composant à aligner doit être déplacé et/ou tourné, ou indiquant une valeur absolue d'une direction et d'une position vers laquelle le composant à aligner doit être déplacé et/ou tourné ; les deux autres étapes de travail suivantes étant exécutées pour déterminer les valeurs cibles (103):

      Déterminer (103-1) des moments de flexion ou une courbe de moments de flexion sur la ligne d'arbres (5; 5a, 5b) sur la base de la valeur mesurée ou des courbes de valeurs mesurées de la mesure de force.
      Déterminer (103-2) une ligne de flexion de la ligne d'arbres (5; 5a, 5b) sur la base des moments de flexion déterminés ou de l'évolution des moments de flexion, les valeurs cibles étant déterminées au moyen de la ligne de flexion; et délivrer (105) les valeurs cibles.

2. Procédé (100) selon la revendication 1, comprenant en outre les étapes de travail suivantes:

   Vérifier (104) si un moment de flexion ou une courbe de moment de flexion sur la ligne d'arbre (5; 5a, 5b) dépasse une valeur seuil; et
   Répétition itérative du procédé (100) si la valeur seuil est dépassée, ou arrêt (109) du procédé (100) si la valeur seuil n'est pas dépassée.

3. Procédé (100) selon l'une des revendications précédentes 1 ou 2, comprenant en outre l'étape suivante :
   Déblocage (106) d'une adhérence entre la machine de charge (14) et la machine motrice (2), notamment par ouverture d'un accouplement de la ligne d'arbre (5; 5a, 5b).

4. Procédé (100) selon l'une quelconque des revendications précédentes 1 à 3, comprenant en outre l'étape suivante:
   Modifier (107) une position de la machine de charge (14) et/ou de la machine motrice (2) sur le banc d'essai (1) sur la base des valeurs cibles émises.

5. Procédé (100) selon l'une quelconque des revendications précédentes 1 à 4, comprenant en outre l'étape suivante:
   Création (108) d'une liaison de force entre la machine de charge (14) et la machine d'entraînement (2).

6. Procédé (100) selon l'une des revendications précédentes 1 à 5, dans lequel une constante, en particulier le produit du module d'élasticité et du couple résistant, de la ligne d'arbre (5; 5a, 5b) est déterminée pour le calcul des lignes de flexion par deux mesures de force par rapport à des positions respectivement différentes de la machine d'entraînement (2) ou de la machine de charge (14).

7. Procédé (100) selon l'une des revendications précédentes 1 à 6, dans lequel l'axe de rotation (D) de la ligne d'arbres (5; 5a, 5b) est un axe de rotation de cet arbre de la ligne d'arbres (5 ; 5a, 5b) sur lequel la mesure de force est effectuée.

8. Procédé (100) selon l'une quelconque des revendications précédentes 1 à 7, dans lequel la mesure de force est effectuée dans un état stationnaire ou dans un état quasi-stationnaire de la ligne d'arbres (5; 5a, 5b).

9. Procédé (100) selon l'une quelconque des revendications précédentes 1 à 8, dans lequel la mesure de force est surveillée en comparant la ou les valeurs mesurées à une valeur de seuil caractérisant une charge critique de la ligne d'arbre (5; 5a, 5b), dans lequel, lorsque la valeur de seuil est dépassée, une rotation de la ligne d'arbre (5;

5a, 5b) est arrêtée ou aucune rotation n'est effectuée.

10. Procédé (100) selon l'une quelconque des revendications précédentes 1 à 9, dans lequel plusieurs capteurs de force (4, 11) sont présents dans le chemin de force et dans lequel chacune des mesures de force des capteurs de force (4, 11) est surveillée.

11. Procédé (100) selon l'une quelconque des revendications précédentes 1 à 10, dans lequel, lors de l'analyse, on distingue le décalage parallèle et/ou le décalage angulaire de la ligne d'arbre (5; 5a, 5b) par rapport au défaut d'alignement.

12. Un programme d'ordinateur comprenant des instructions qui, lorsqu'elles sont exécutées par un ordinateur, amènent ce dernier à exécuter les étapes d'un procédé selon l'une quelconque des revendications 1 à 11.

13. Un support lisible par ordinateur comprenant des instructions qui, lorsqu'elles sont exécutées par un ordinateur, amènent celui-ci à exécuter les étapes d'un procédé selon l'une quelconque des revendications 1 à 11.

14. Banc d'essai de chaîne cinématique (1) comprenant :

   une machine de charge (14a, 14b) qui peut-être reliée à une ligne de transmission (5 ; 5a, 5b) à tester ;
   au moins un capteur de force piézoélectrique (4a, 4b, 4c, 4d), qui est disposé dans un chemin de force, par lequel, lors d'une transmission de puissance de la machine de charge (14a, 14b) du banc d'essai (1) par l'intermédiaire de la ligne d'arbre (5 ; 5a, 5b) et est conçu pour effectuer une mesure de force dans un plan (A, B ; F) et/ou perpendiculaire au plan (A, B ; F) qui est coupé par un axe de rotation (D) de la ligne d'arbres (5 ; 5a, 5b) et qui est de préférence au moins sensiblement perpendiculaire à l'axe de rotation (D) ; et
   un dispositif de traitement de signal (7) comprenant

   - des moyens (8), agencés pour analyser une valeur de mesure ou une courbe de valeur de mesure de la mesure de force pour détecter un défaut d'alignement de la ligne d'arbres (5 ; 5a, 5b);
   - des moyens (9) pour déterminer des valeurs cibles pour une correction de position de la machine de charge ou de la machine d'entraînement, afin de minimiser le défaut d'alignement, les valeurs cibles indiquant une direction et une distance autour desquelles un composant à aligner doit être déplacé et/ou tourné, ou indiquant une valeur absolue d'une direction et d'une position vers laquelle le composant à aligner doit être déplacé et/ou tourné, les deux étapes de travail supplémentaires suivantes étant exécutées pour déterminer les valeurs cibles (103):

      o détermination (103-1) de moments de flexion ou d'une courbe de moment de flexion sur la ligne d'arbre (5 ; 5a, 5b) sur la base de la valeur mesurée ou des courbes de valeur mesurée de la mesure de force; et
      o détermination (103-2) d'une ligne de flexion de la ligne d'arbres (5 ; 5a, 5b) sur la base des moments de flexion déterminés ou de la courbe des moments de flexion, les valeurs cibles étant déterminées au moyen de la ligne de flexion; et

   - des moyens (10), notamment une interface, pour délivrer les valeurs cibles.

15. Banc d'essai de chaîne cinématique (1) selon la revendication 14, dans lequel le banc d'essai de chaîne cinématique (1) comporte en outre un dispositif de réglage (12a, 12b, 12c), agencé pour modifier une position de la machine de charge (14a, 14b) ou de la machine motrice (2) en translation et/ou en rotation, le banc d'essai de la chaîne cinématique (1), en particulier le dispositif de traitement des signaux (7), présentant en outre:

   - des moyens (15) agencés pour commander le dispositif de réglage (12) sur la base des valeurs cibles émises.

*Fig. 1a*

*Fig. 1b*

*Fig. 1c*

100

101

102

103-1

103-2

103-3

104 → 109

105

106

107

108

*Fig. 2*

Fig. 3

Fig. 4

EP 4 172 554 B1

Fig. 5

Fig. 6

*Fig. 7*

*Fig. 8*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021011982 A

**In der Beschreibung aufgeführte Nicht-Patentliteratur**

- Double Fed Induction Generator Shaft Misalignment Monitoring by FBG Frame Strain Sensing. **WANG YINGZHAO et al.** IEEE SENSORS JOURNAL. IEEE, 29. Marz 2020, vol. 20, 8541-8551